**Europäisches Patentamt**

**European Patent Office**

**Office européen des brevets**

(19)

(11) Veröffentlichungsnummer : **0 460 037 B1**

(12) **EUROPÄISCHE PATENTSCHRIFT**

(45) Veröffentlichungstag der Patentschrift :
**03.02.93 Patentblatt 93/05**

(21) Anmeldenummer : **90903814.3**

(22) Anmeldetag : **17.02.90**

(86) Internationale Anmeldenummer :
**PCT/EP90/00265**

(87) Internationale Veröffentlichungsnummer :
**WO 90/09831 07.09.90 Gazette 90/21**

(51) Int. Cl.⁵ : **B01D 3/42**

(54) **MODELLGESTÜTZTE DIAGNOSE- UND REGELEINRICHTUNG FÜR REKTIFIKATIONSKOLONNEN.**

(30) Priorität : **25.02.89 DE 3906002**

(43) Veröffentlichungstag der Anmeldung :
**11.12.91 Patentblatt 91/50**

(45) Bekanntmachung des Hinweises auf die
Patenterteilung :
**03.02.93 Patentblatt 93/05**

(84) Benannte Vertragsstaaten :
**AT BE CH DE FR GB IT LI NL SE**

(56) Entgegenhaltungen :
**DE-A- 2 508 139**
**DE-B- 1 277 811**
**US-A- 3 356 590**
**US-A- 4 166 770**
**US-A- 4 230 534**
**US-A- 4 401 512**

(73) Patentinhaber : **Henkel**
**Kommanditgesellschaft auf Aktien**
**Postfach 1100 Henkelstrasse 67**
**W-4000 Düsseldorf 1 (DE)**

(72) Erfinder : **JEROMIN, Lutz**
**Am Bandsbusch 88**
**W-4010 Hilden (DE)**
Erfinder : **WOZNY, Günter**
**Brucknerstrasse 30**
**W-4020 Mettmann (DE)**
Erfinder : **LÜDER, Thomas**
**Furtwänglerstrasse 42**
**W-4010 Hilden (DE)**

Jouve, 18, rue Saint-Denis, 75001 PARIS

## Beschreibung

Die Erfindung betrifft zum einen eine Einrichtung gemäß dem Oberbegriff des Anspruchs 1.

Die Destillation ist einer der wichtigsten Trennprozesse in der chemischen Industrie. Während der letzten Jahre wurde das Problem eines verbesserten Betriebs von Destillationskolonnen im Hinblick auf eine Gewährleistung von Produktreinheiten und Energieverbrauchsreduzierungen in Forschung und Praxis wichtig. Da Destillationskolonnen komplexe Systeme höherer Ordnung mit wechselwirkenden Regelkreisen sind, ist die Erfahrung des Bedienungspersonals gewöhnlich mit diesem Problem überlastet.

Bekannt ist, daß die für die Regelung maßgebliche Zustandsgrößen wie die Produktzusammensetzung am Ausgang der Kolonne während des Betriebs von Zeit zu Zeit, zum Beispiel durch Gaschromatografie gemessen und die gemessenen Werte zum Steuern von Stellgliedern der Kolonne benutzt werden, um eine gleichbleibende Produktzusammensetzung am Ausgang der Kolonne zu gewährleisten. Diese Messungen sind jedoch zeitaufwendig und geben daher nicht den aktuellen Zustand der Kolonne, sondern nur einen zeitlich zurückliegenden Zustand wieder. Der Erfindung liegt daher die Aufgabe zugrunde, eine Einrichtung zu schaffen, die es ermöglicht, maßgebliche Zustandsgrössen wie die Produktzusammensetzung praktisch momentan zu erfassen. Dadurch soll die Zeitverzögerung zwischen dem Augenblick der Probenentnahme und der Anzeige des Ergebnisses soweit reduziert werden, daß von einer Online-Messung gesprochen werden kann.

Diese Aufgabe wird erfindungsgemäß durch die Merkmale des Anspruchs 1 gelöst.

Gegenüber einem bekannten Stand der Technik (Zeitschrift "Regelungstechnische Praxis" 22, 120 (1980) weist die Erfindung zwei Vorteile auf. Die vorliegende Erfindung gestattet eine dynamische Berechnung der Produktkonzentration im Gegensatz zur dort beschriebenen stationären Modellierung. Außerdem ist die erfindungsgemäße Einrichtung nicht wie dort beschrieben auf die Berechnung des Kolonnenkopfes beschränkt, sondern die gesamte Kolonne mit ihren Wechselwirkungen zwischen Kopf und Sumpf wird modelliert. Dies ermöglicht die Berechnung der Zusammensetzung des Destillats und des Sumpfprodukts.

In der DE-OS 15 19 630 ist ein Regelungsverfahren beschrieben, das jedoch nur unter der Bedingung sinnvoll genutzt werden kann, daß in der zu regelnden Kolonne lediglich ein Zwei-Komponentengemisch in Produkte hoher Reinheit (ppm-Bereich) getrennt werden soll. Die erfindungsgemäß untersuchten Mehrkomponententrennaufgaben erfüllen diese Voraussetzungen nicht.

Des weiteren wird in diesem ähnlich wie in dem vorher genannten Stand der Technik lediglich ein Teilsystem der Rektifikationskolonne modelliert und geregelt, während sich die Erfindung auf die Gesamtkolonne bezieht.

Besonders bewährt sich die erfindungsgemäße Einrichtung, wenn die Fraktionierungsanlage mindestens 2 hintereinandergeschaltete Rektifikationskolonnen aufweist. Rektitikationskolonnen werden hintereinander geschaltet, um einen Eingangsstrom mit mehr als zwei Komponenten vollständig in diese zu zerlegen. Die Steuerung oder Regelung einer solchen Anlage ist jedoch besonders schwierig, weil der Feedzustand der zweiten Kolonne von den Betriebsbedingungen der ersten Kolonne abhängt. Vorteilhaft ist daher eine Einrichtung nach Anspruch 2.

Insbesondere ist es bei der erfindungsgemäßen Einrichtung vorteilhaft, wenn die in Anspruch 3 bzw. Anspruch 4 genannten Vereinfachungen der Komponentenbilanzen für das Destillat und das Sumpfprodukt in das Modell eingehen.

Die Erfindung betrifft zum anderen ein Verfahren zum kontinuierlichen Messen der Produktkonzentrationen einer Fraktionierungsanlage gemäß Anspruch 5. Besonders vorteilhaft ist der in diesem Anspruch genannte Abgleich der Modelldaten durch chemische Analysedaten.

Die Erfindung umfaßt des weiteren eine Regeleinrichtung nach Anspruch 6. In diesem Fall werden die ermittelten Produktzusammensetzungen unmittelbar zum Betätigen von Stellgliedern benutzt.

Dadurch läßt sich eine sehr viel genauere Regelung erreichen, besonders in schwierigen Betriebszuständen.

Im folgenden wird ein Ausführungsbeispiel der Erfindung anhand von Zeichnungen dargestellt. Es zeigen:

Figur 1 eine Fraktionierungsanlage für Fettalkohole im Schema,

Figur 2 Gleichgewichtsabschnitte einer Rektifikationskolonne und zwar den Verstärkungs- und Abtriebsteil,

Figuren 3 und 4 in der Beschreibung genannte Gleichungen und

Figur 5 einen graphischen Vergleich der gemessenen und berechneten Zusammensetzung des Destillats der zweiten Kolonne der Rektifikationsanlage.

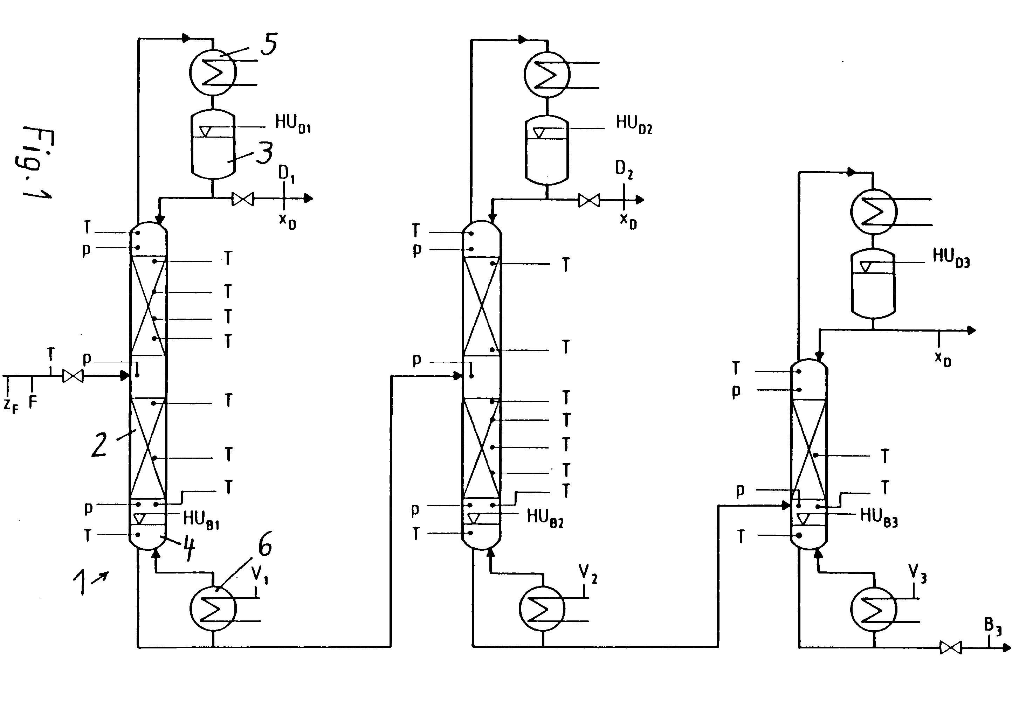

Die Fraktionierungsanlage mit der erfindungsgemäßen Einrichtung ist eine Fraktionierungsanlage für Fettalkohole (Figur 1). Sie besteht aus drei Multikomponenten-Destillationskolonnen mit Metallpackungen, die unter Vakuum arbeiten. Die Kolonnen sind direkt miteinander verbunden, so daß das Sumpfprodukt der einen Kolonne als Feed der nächsten benutzt wird. Die Feedbedingungen variieren über einen weiten Bereich, und wechselnde Produktspezifikationen führen zu vielen Arbeitspunkten der Anlage. Obwohl Analysenresultate aus der Gaschromatografie nur für den Feed und die drei Kopfprodukte erhältlich sind und mit langen Antwortzeiten, nähmlich zwischen 30 und 45 Minuten verbunden sind, wird erfindungsgemäß eine kontinuierliche Steuerung der Produktzusammensetzung erreicht. Erschwerend kommt jedoch hinzu, daß in Systemen mit mehr als zwei Komponenten Konzentration und Temperatur nicht eindeutig miteinander in Beziehung zu setzen sind, so daß eine Steuerung über die Temperatur anstatt über die Zusammensetzung nicht befriedigend ist. Im Stand der Technik wird die Konzentration per Hand geregelt, unter Berücksichtigung der Analysenresultate der drei Destillate.

Da Simulationsresultate der Kolonnen zeigen, daß es keine detektierbare Temperaturfront gibt, wurde ein spezielles Modell zum Abschätzen der Produktzusammensetzungen entwickelt. Um eine vereinfachte Beschreibung des Prozesses mit physikalisch signifikanten Parametern zu erhalten, wurde das Modell mittels bestimmter Annahmen reduziert.

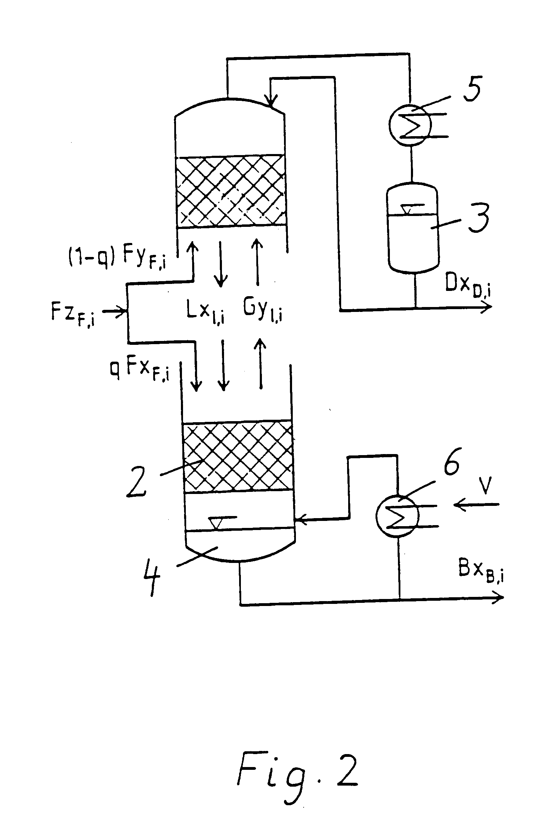

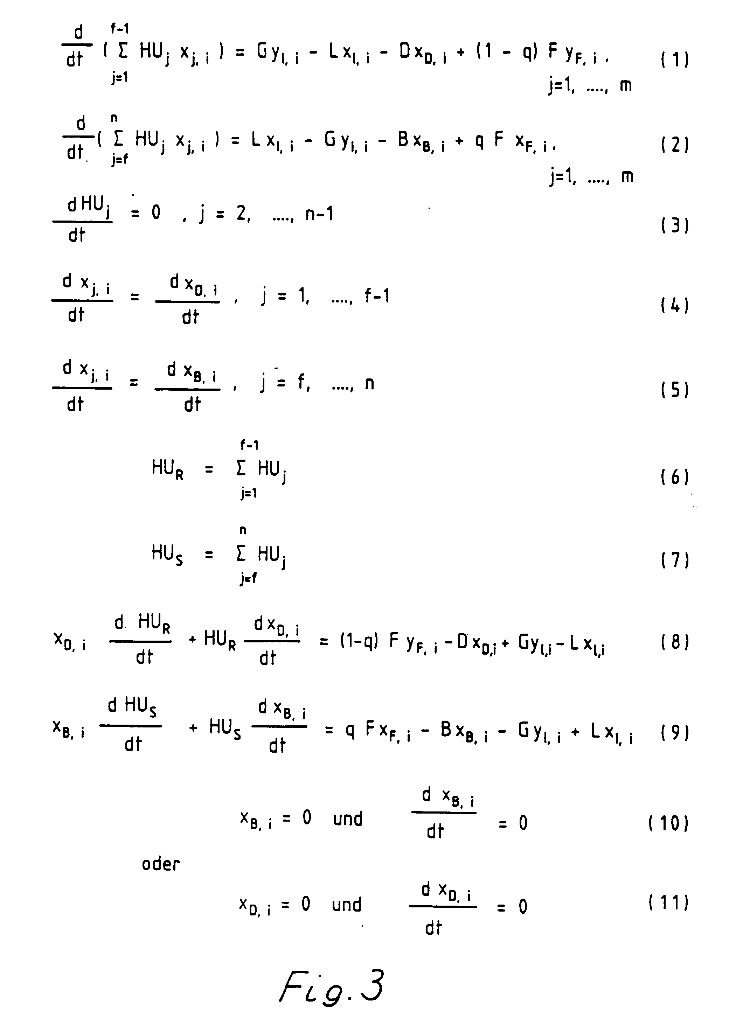

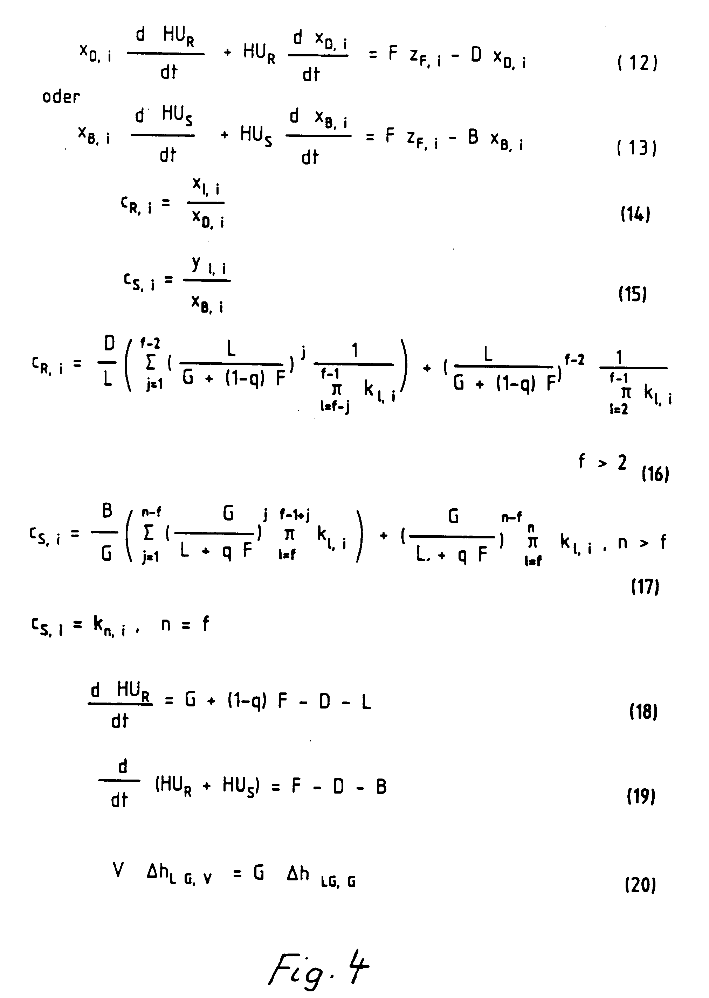

Aus Figur 2 können die folgenden dynamischen Komponentenbilanzen für den Verstärkungs- und Abtriebsteil der Destillationskolonne abgeleitet werden (Gleichungen 1 und 2). Diese und die folgenden Gleichungen sind in den Figuren 3 und 4 dargestellt. Dabei wurde ein Prozeß-Modell mit Gleichgewichtstrennstufen vorausgesetzt und der Dampf-Hold up auf jeder Stufe vernachlässigt. Um die Differentialterme zu vereinfachen, wurden die Gleichungen 3 bis 5 postuliert.

Mit den Gleichungen 6 und 7 erhalten wir die Gleichungen 8 und 9, die für die Komponenten gelten, die die Kolonne mit dem Destillat und dem Sumpffluß verlassen ("separierte Komponenten"). In einer Mehrkomponenten-Destillation findet man jedoch oft Betriebsbedingungen, wo weitere Vereinfachungen gerechtfertigt sind. Für Komponenten, die die Kolonne fast vollständig mit dem Destillat oder dem Sumpfproduktstrom verlassen ("nichtseparierte Komponenten"), gelten Gleichungen 10 oder 11. Unter diesen Voraussetzungen erhält man aus den Gleichungen 8 und 9 die Gleichungen 12 oder 13. Für die nichtseparierten Komponenten kann die Produktkonzentration aus der Gleichung 12 oder 13 berechnet werden. Um die Modellgleichungen für die separierten Komponenten (Gleichungen 8 und 9) zu lösen, müssen die unbekannten internen Konzentrationen $X_I$ und $Y_I$ durch die Produktkonzentrationen $X_D$ und $X_B$ ausgedrückt werden. Daher werden Separierungsfaktoren (Gleichungen 14 und 15) eingeführt. Unter der Annahme äquimolarer Verdampfung und Kondensation und Gleichgewichtstrennstufen können $c_{R,i}$ und $c_{S,i}$ aus den Komponentenbilanzen um den Kopf und den Sumpf der Kolonne berechnet werden und man erhält die Gleichungen 16 und 17. Für Mischungen einer homologen Reihe von langkettigen n-Alkoholen ist es ausreichend, Raoults Gesetz zu benutzen, um das Phasengleichgewicht zu beschreiben. Damit werden für die separierten Komponenten die Gleichgewichtskonstanten $k_{j,i}$ aus den gemessenen Temperatur- und Druckprofilen der Kolonne durch die Antoine-Gleichung berechnet. Die Massenbilanz-Gleichungen 18 und 19 und die Verdampferbilanz für den stationären Zustand (Gleichung 20) vervollständigen das Modell.

Die Reduzierung dieses Satzes von -Gleichungen führt zu einem System von weniger als 2 m Gleichungen für die unbekannten Produktkonzentrationen der Destillationskolonne, wobei m die Zahl der Komponenten ist. Die exakte Zahl hängt davon ab, wie viele Komponenten als nicht separierte betrachtet werden. Die Berechnung basiert auf der Kenntnis des Kolonnendrucks und des Temperaturprofils. Die Füllstandsschwankungen und die beiden unabhängigen Massenströme erhält man aus Messungen.

Für die Anwendung des beschriebenen Modells wurde ein Computerprogramm auf einem Prozeßcomputer implementiert und die erforderlichen Messungen an allen drei Kolonnen in einminütigen Zeitabschnitten vorgenommen. Der Gleichungssatz wurde mit einer impliziten Euler-Methode mit Zeitintervallen von ebenfalls einer Minute gelöst.

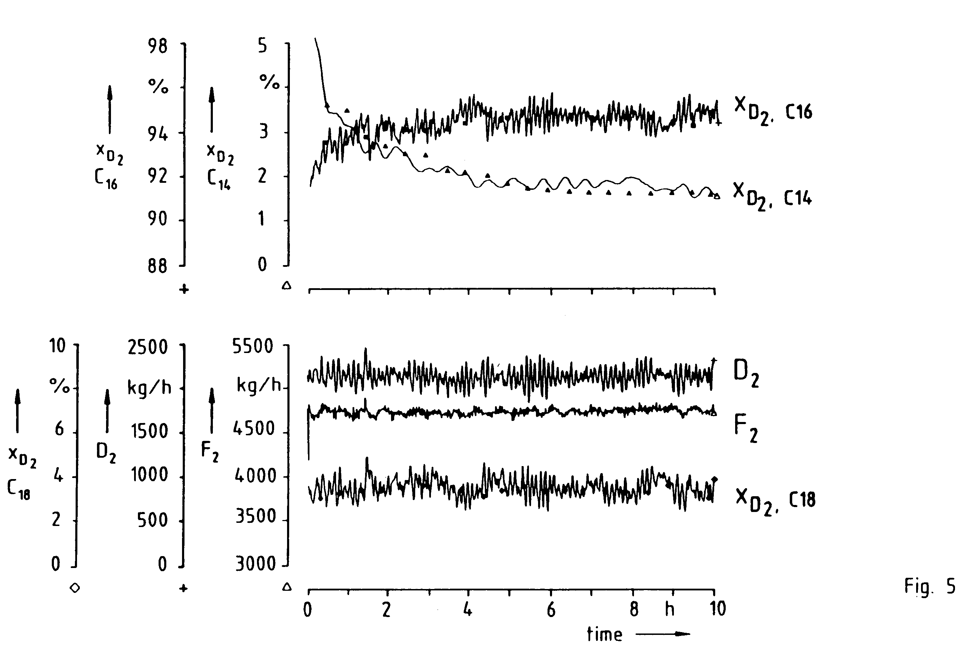

Die mit Hilfe dieser Gleichungen berechneten Werte für Sumpf-Zusammensetzung und Sumpfproduktstrom der einen Kolonne wurden als Feedbedingungen für die nächste benutzt. In Figur 5 werden die Ergebnisse der Berechnung der Zusammensetzung für das Kopfprodukt der zweiten Kolonne mit den Analyseresultaten während eines Zeitintervalls von 10 Stunden verglichen. Der obere Teil der Figur zeigt die durch die Füllstandsregelung hervorgerufenen Oszillationen des Feedstroms (berechneter Sumpfproduktstrom der ersten Kolonne) und des Destillatstroms. Die anderen Kurven zeigen den Trend der Konzentrationen der n-Alkohole C 14 (nicht separiert), C 16 und C 18 (separiert). Die signifikante Änderung in der gemessenen Zusammensetzung während des ersten Teils des Intervalls wird durch die berechneten Konzentrationen gut reproduziert. Generell ist die Abweichung zwischen gemessenen und berechneten Konzentrationen kleiner als 1 %.

Die Ausführung des Programms für die drei Kolonnen bei einer Echtzeit von 10 Stunden erfordert eine reine Rechenzeit von nur ungefähr 13 Minuten CPU auf einem Mikro VAX II Mikrocomputer.

Erfindungsgemäß wird also ein dynamisches Modell zur Berechnung der Produktzusammensetzungen für Mehrkomponenten-Destillationen eingeführt, das nicht auf einen speziellen Arbeitspunkt oder eine spezielle Kolonnenstruktur beschränkt ist. Die Ergebnisse zeigen, daß das Modell das Anlagenverhalten sehr gut beschreibt. Damit kann es genutzt werden, um wichtige Informationen für den Betrieb der Anlage zu liefern. Außerdem bildet das Modell die Grundlage für eine automatische Regelung der Zusammensetzung für Mehrkomponenten-Destillationskolonnen.

**Notation**

B= Sumpfflußrate
c= Trennfaktor
d= Destillatflußrate
F= Feed-Rate
G= Gasflußrate in der Kolonne
HU= Flüssiger Hold up
K= Konstante
k= Gleichgewichtskonstante
L= Flüssigflußrate in der Kolonne
m= Zahl der Komponenten
n= Zahl der theoretischen Stufen
p= Druck
q= thermischer Zustand des Feed
R= Rückflußrate
s= Ort der Front
T= Temperatur
t= Zeit
V= Dampfflußrate
x= Molenbruch für die Flüssigkeit
y= Molenbruch Gas
z= Molenbruch Feed
delta $h_{LG}$ = Verdampfungswärme

**Indizes**

B= Sumpf
D= Destillat
f= erste Stufe des Stripping-Abschnitts
F= Feed
G= Gas
I= intern
i= Komponente
j= Stufe
n= letzte theoretische Stufe der Kolonne (Verdampfer)
R= Rektifizierungs-Abschnitt
S= Stripping-Abschnitt
V= Dampf

**Bezugszahlenliste**

1 Rektifikationskolonne
2 Kolonneneinbauten
3 Destillatvorlage
4 Kolonnensumpf
5 Kondensator
6 Verdampfer

**Patentansprüche**

1. Einrichtung zum modellgestützten Messen der Produktkonzentrationen einer Fraktionierungsanlage auf der Basis der instationären Massen- und Komponentenbilanzen sowie einer thermodynamischen Beschreibung der Phasengleichgewichte unter Verwendung stoffspezifischer und anlagenspezifischer Größen, wobei die anlagenspezifischen Größen die Zahl der theoretischen Trennstufen, die Position der Feedstelle, die Position der Meßstellen für Druck und Temperatur sowie der Flüssigkeits-holdup der Kolonneneinbauten (2) und die stoffspezifischen Größen die Dampfdruckdaten, Verdampfungsenthalpien, spezifische Wärmekapazitäten und Molmassen sind, mit an der Fraktionierungsanlage angebrachten Meßgeräten, deren Ausgangssignale mittels eines Rechners oder einer Schaltung zu die Produktkonzentrationen darstellenden Signale verarbeitbar sind,

dadurch gekennzeichnet,

daß die von den Meßgeräten meßbaren Meßgrößen

die Temperatur in Abhängigkeit der Kolonnenhöhe,

der Druck in Abhängigkeit der Kolonnenhöhe,

der Feedmengenstrom,

die Feedzusammensetzung,

die Feedtemperatur,

der Füllstand der Destillatvorlage (3),

der Füllstand im Kolonnensumpf (4) sowie zwei der vier Mengenströme Destillatstrom, Rücklaufstrom, Heizdampfstrom und Sumpfproduktstrom oder mit diesen Mengenströmen gebildete abgeleitete Größen, insbesondere die Verhältnisse zweier Ströme sind, und daß der Rechner bzw. die Schaltung derart aufgebaut ist, so daß die Ausgangssignale der Meßgeräte unter Verwendung eines mathematischen Modells auf der Basis der Basis der Komponentenbilanzen

$$x_{D,i} \frac{dHU_R}{dt} + HU_R \frac{dx_{D,i}}{dt} = (1 - q) F Y_{F,i} - D x_{D,i} + G c_{S,i} x_{B,i} - L c_{R,i} x_{D,i}$$

$$x_{B,i} \frac{dHU_s}{dt} + HU_s \frac{dx_{B,i}}{dt} = q F x_{F,i} - B x_{B,i} - G c_{S,i} x_{B,i} + L c_{R,i} x_{D,i,}$$

der Thermodynamischen Gleichungen

$$c_{R,i} = \frac{D}{L} \sum_{j=1}^{f-2} \left(\frac{L}{G_R}\right)^j \frac{1}{\prod_{l=f-j}^{f-1} k_{l,i}} + \left(\frac{L}{G_R}\right)^{f-2} \frac{1}{\prod_{l=2}^{f-1} k_{l,i}} ;$$

$$f > 2$$

$$c_{S,i} = \frac{B}{G} \sum_{j=1}^{n-f} \left(\frac{G}{L_S}\right)^j \prod_{l=f}^{f-1+j} k_{l,i} + \left(\frac{G}{L_S}\right)^{n-f} \prod_{l=f}^{n} k_{l,i} ;$$

$$C_{S,i} = k_{i,j} ; n = f \, k_{i,j} = \text{Funktion von } p,T ,$$

sowie der Massenbilanzen

$$\frac{d HU_R}{dt} = G + (1 - q) F - D - L$$

$$\frac{d}{dt}(HU_R + HU_S) = F - D - B$$

und der Energiebilanz

$$V \, \text{delta} \, h_{LG,V} = G \, \text{delta} \, h_{LG,G}$$

zu den die nichtgemessenen Mengenströme sowie die Zusammensetzungen des Destillatstroms und des Sumpfproduktstroms darstellenden Signalen verarbeitbar sind, wobei

B den Sumpfproduktstrom,

C den Trennfaktor,

D den Destillatstrom,

F den Feedstrom,

G den Dampfstrom in der Kolonne (1),

HU den flüssigen Hold up,

h die Enthalpie,

k die Gleichgewichtskonstante,

L den Flüssigkeitsstrom in der Kolonne (1),

5

n die Zahl der theoretischen Stufen,
p den Druck,
q den thermischen Zustand des Feed,
T die Temperatur,
t die Zeit,
V den Dampfstrom,
x den Molenbruch in der Flüssigkeit,
y den Molenbruch im Gas,
delta $h_{LG}$ die Verdampfungsenthalpie
bezeichnen und die Indizes
B den Sumpf,
D das Destillat,
f die erste Stufe des Abtriebsteils,
F den Feed,
G das Gas,
i die Komponente,
j die theoretische Stufe,
n die letzte theoretische Stufe der Kolonne (Verdampfer),
R den Verstärkungsteil,
S den Abtriebsteil und
V den Dampf
bezeichnen.

**2.** Einrichtung nach Anspruch 1, wobei die Fraktionierungsanlage mindestens zwei hintereinandergeschaltete Rektifikationskolonnen (1) aufweist,
dadurch gekennzeichnet,
daß die den Feedgrößen Mengenstrom und Zusammensetzung der der ersten Kolonne nachfolgenden Kolonnen (1) entsprechenden Signale von dem Rechner bzw. der Schaltung aus den Signalen der vorgehenden Kolonnen erzeugbar sind.

**3.** Einrichtung nach Anspruch 1 oder 2,
dadurch gekennzeichnet,
daß der Rechner bzw. die Schaltung derart aufgebaut ist, daß im Fall einer 0,1 % nicht übersteigenden Destillatkonzentration einer Komponente bei der Verarbeitung der Ausgangsignale der Meßgeräte und / oder der Signale der vorgehenden Kolonnen

$$x_{D,i} = 0 \text{ und}$$

$$HU_S \frac{dx_{B,i}}{dt} - x_{B,i} \frac{d\,HU_R}{dt} = F\,Z_{F,i} - B\,x_{B,i}$$

für die Bestimmung der Produktkonzentration dieser Komponnente gilt, wobei z den Molenbruch Feed bezeichnet.

**4.** Einrichtung nach einem der Ansprüche 1 bis 3,
dadurch gekennzeichnet,
daß der Rechner bzw. die Schaltung derart aufgebaut ist, daß im Fall einer 0,1 % nicht übersteigenden Sumpfkonzentration einer Komponente bei der Verarbeitung der Ausgangssignale der Meßgeräte und / oder der Signale der vorgehenden Kolonnen

$$x_{B,i} = 0$$

$$HU_R \frac{d\,x_{D,i}}{dt} + x_{D,i} \frac{d\,HU_R}{dt} = F\,z_{F,i} - D\,x_{D,i}$$

für die Bestimmung der Produktkonzentration dieser Komponente gilt, wobei z den Molenbruch Feed bezeichnet.

**5.** Verfahren zum kontinuierlichen Messen der Produktkonzentrationen einer Fraktionierungsanlage mittels einer Einrichtung nach einem der Ansprüche 1 bis 4,
dadurch gekennzeichnet,
daß die Produktkonzentrationen in zeitlichen Intervallen von mindestens 30 min. mittels chemischer Analyse ermittelt werden und diese Analysedaten zum Abgleich des Rechners bzw. der Schaltung verwendet werden.

EP 0 460 037 B1

**6.** Regeleinrichtung für eine Fraktionierungsanlage mit einer Einrichtung zum modellgestützten Messen nach einem der Ansprüche 1 bis 4,
gekennzeichnet durch
Stellglieder zum Einstellen von zwei der vier Mengenströme Destillatstrom, Rücklaufstrom, Heizdampfstrom und Sumpfproduktstrom oder mit diesen Mengenströmen gebildeten abgeleiteten Größen, insbesondere den Verhältnissen zweier Ströme, und einen mit den Stellgliedern verbundenen und diese ansteuernden Regler zum Konstanthalten der Produktkonzentrationen, wobei die Istgrößen des Reglers die die Produktkonzentrationen darstellenden Signale sind.

## Claims

**1.** A system for the model-aided measurement of the product concentrations of a fractionating plant based on the non-steady mass and component balances and on thermodynamic description of the phase equilibria using material-specific and plant-specific variables, the plant-specific variables being the number of theoretical separation stages, the position of the feed point, the position of the measuring points for pressure and temperature and the liquid holdup of the column baffles (2) and the material-specific variables being the vapor pressure data, enthalpies of evaporation, specific heat capacities and molecular weights, comprising measuring instruments installed in the fractionating plant, of which the output signals can be processed by a computer or circuit to signals representing the product concentrations, characterized in that
the variables measurable by the measuring instruments are the temperature as a function of the column height,
the pressure as a function of the column height,
the feed flow rate,
the feed composition,
the feed temperature,
the filling level of the distillate receiver (3),
the filling level in the column sump (4) and two of the following four flow rates: distillate, reflux, heating steam and sump product, or derived variables formed with these flow rates, more particularly the ratios between two flow rates, and in that the computer or the circuit is designed in such a way that the output signals of the measuring instruments can be processed to signals representing the non-measured flow rates and the compositions of the distillate stream and the sump product stream using a mathematical model based on the component balances

$$x_{D,i} \frac{dHU_R}{dt} + HU_R \frac{dx_{D,i}}{dt} = (1 - q) F Y_{F,i} - D x_{D,i} + G c_{S,i} x_{B,i} - L c_{R,i} x_{D,i}$$

$$x_{B,i} \frac{dHU_s}{dt} + HU_s \frac{dx_{B,i}}{dt} = q F x_{F,i} - B x_{B,i} - G c_{S,i} x_{B,i} + L c_{R,i} x_{D,i,}$$

the thermodynamic equations

$$c_{R,i} = \frac{D}{L} \sum_{j=1}^{f-2} \left(\frac{L}{G_R}\right)^j \frac{1}{\prod_{l=f-j}^{f-1} k_{l,i}} + \left(\frac{L}{G_R}\right)^{f-2} \frac{1}{\prod_{l=2}^{f-1} k_{l,i}} ;$$

$$f > 2$$

$$c_{S,i} = \frac{B}{G} \sum_{j=1}^{n-f} \left(\frac{G}{L_S}\right)^j \prod_{l=f}^{f-1+j} k_{l,i} + \left(\frac{G}{L_S}\right)^{n-f} \prod_{l=f}^{n} k_{l,i} ;$$

$$c_{S,i} = k_{i,j}; \quad n = f \quad k_{i,j} = \text{function of } p, T$$

7

and also the mass balances

$$\frac{d\,HU_R}{dt} = G + (1 - q)\,F - D - L$$

$$\frac{d}{dt} = (HU_R + HU_S) = F - D - B$$

and the energy balance
V delta $h_{LG,V}$ = G delta $h_{LG,G'}$
where
B = sump product stream,
C = separation factor,
D = distillate stream
F = feed stream,
G = vapor stream in column (1),
HU = liquid holdup,
h = enthalpy,
k = equilibrium constant,
L = liquid stream in column (1),
n = number of theoretical stages,
p = pressure,
q = thermal state of the feed,
T = temperature,
t = time,
V = vapor stream,
x = mole fraction in the liquid,
y = mole fraction in the gas,
delta $h_{LG}$ = enthaply of evaporation
and the indices
B = sump
D = distillate
f = first stage of the stripping section
F = feed
G = gas
i = component
j = theoretical stage
n = last theoretical stage of the column (evaporator)
R = rectifying section
S = stripping section
V = vapor.

2.  A system as claimed in claim 1, the fractionating plant comprising at least two rectifying columns (1) arranged in line, characterized in that the signals corresponding to the feed variables of flow rate and composition of the columns (1) following the first column are designed to be produced by the computer or circuit from the signals of the preceding columns.

3.  A system as claimed in claim 1 or 2, characterized in that the computer or circuit is designed in such a way that, where the distillate concentration of one component does not exceed 0.1% during processing of the output signals of the measuring instruments and/or the signals of the preceding columns,

$$x_{D,i} = 0 \text{ and}$$

$$HU_S \frac{dx_{B,i}}{dt} - x_{B,i} \frac{d\,HU_R}{dt} = F\,Z_{F,i} - B\,x_{B,i}$$

where z is the feed mole fraction,
are applied to determine the product concentration of that component.

4.  A system as claimed in any of claims 1 to 3, characterized in that the computer or circuit is designed in such a way that, where the sump concentration of one component does not exceed 0.1% during processing of the output signals of the measuring instruments and/or the signals of the preceding columns,

$$x_{B,i} = 0 \text{ and}$$

$$HU_R \frac{d\,x_{D,i}}{dt} + x_{D,i} \frac{d\,HU_R}{dt} = F\,z_{F,i} - D\,x_{D,i}$$

where $z$ is the feed mole fraction,
are applied to determine the product concentration of that component.

5. A process for continuously measuring the product concentrations of a fractionating plant using the system claimed in any of claims 1 to 4, characterized in that the product concentrations are determined by chemical analysis at time intervals of at least 30 minutes and the analytical data obtained are used to adjust the computer or the circuit.

6. A control system for a fractionating plant comprising the model-aided measurement system claimed in any of claims 1 to 4, characterized by final control elements for adjusting two of the following four flow rates: distillate, reflux, heating steam and sump product, or derived variables formed with these flow rates, more particularly the ratios between two flow rates, and by a controller connected to and controlling the final control elements to keep the product concentrations constant, the actual values of the controller being the signals representing the product concentrations.

**Revendications**

1. Dispositif de mesure assistée par modèle des concentrations en produit d'une installation de fractionnement sur base des bilans de masse et des bilans de composants instationnaires ainsi que d'une description thermodynamique des équilibres de phases en utilisant des grandeurs spécifiques aux substances et spécifiques à l'installation, les grandeurs spécifiques à l'installation étant le nombre d'étages théoriques de séparation, la position du point d'alimentation, la position des points de mesure de la pression et de la température ainsi que la charge de séjour liquide des chicanes de la colonne (2) et les grandeurs spécifiques à la substance étant les données de pression de vapeur, les enthalpies de vaporisation, les capacités thermiques spécifiques et les masses molaires avec des appareils de mesure affectés à l'installation de fractionnement dont les signaux de sortie peuvent être traités par un ordinateur ou un circuit en signaux représentant les concentrations en produit, caractérisé en ce que les grandeurs mesurables par les appareils de mesure sont
la température en fonction de la hauteur de la colonne,
la pression en fonction de la hauteur de la colonne,
le flux de masse d'alimentation,
la composition d'alimentation,
la température d'alimentation,
le niveau du collecteur de produit distillé (3),
le niveau dans le bas de la colonne (4) ainsi que deux des quatre flux de masse, à savoir le flux de produit distillé, le flux de recirculation, le flux de vapeur de chauffe et le flux de résidu de distillation ou les grandeurs dérivées formées avec ces flux de masse, en particulier les rapports de deux flux et en ce que le circuit ou l'ordinateur est conçu de façon telle que les signaux de sortie des appareils de mesure peuvent être traités par la mise en oeuvre d'un modèle mathématique sur base des bilans de composants

$$x_{D,i} \frac{dHU_R}{dt} + HU_R \frac{dx_{D,i}}{dt} = (1 - q)\,F\,Y_{F,i} - D\,x_{D,i} - G\,c_{S,i}\,x_{B,i} - L\,c_{R,i}\,x_{D,i}$$

$$x_{B,i} \frac{dHU_s}{dt} + HU_S \frac{dx_{B,i}}{dt} = q\,F\,x_{F,i} - B\,x_{B,i} - G\,c_{S,i}\,x_{B,i} + L\,c_{R,i}\,x_{D,i,}$$

des équations thermodynamiques

$$c_{R,i} = \frac{D}{L} \sum_{j=1}^{f-2} \left(\frac{L}{G_R}\right)^j \frac{1}{\prod\limits_{l=f-j}^{f-1} k_{l,i}} + \left(\frac{L}{G_R}\right)^{f-2} \frac{1}{\prod\limits_{l=2}^{f-1} k_{l,i}} \; ;$$

$$f > 2$$

$$c_{S,i} = \frac{B}{G} \sum_{j=1}^{n-f} \left(\frac{G}{L_S}\right)^j \prod\limits_{l=f}^{f-1+j} k_{l,i} + \left(\frac{G}{L_S}\right)^{n-f} \prod\limits_{l=f}^{n} k_{l,i} \; ;$$

$$c_{S,i} = k_{i,j} \; ; \; n = f \qquad k_{i,j} = \text{fonction de p,T}$$

ainsi que des bilans de masse

$$\frac{d\, HU_R}{dt} = G + (1 - q)\, F - D - L$$

$$\frac{d}{dt} = (HU_R + HU_S) = F - D - B$$

et du bilan énergétique

$$V\, \text{delta } h_{LG,V} = G\, \text{delta } h_{LG,G}$$

pour former des signaux représentant les flux de masse non mesurés ainsi que les compositions du flux de produit distillé et du flux de résidu de distillation,

| | |
|---|---|
| B | désignant le flux de résidu de distillation |
| C | le facteur de séparation |
| D | le flux de produit distillé |
| F | le flux d'alimentation |
| G | le flux de vapeur dans la colonne (1), |
| HU | la charge de séjour liquide |
| h | l'enthalpie |
| k | la constante d'équilibre |
| L | le flux de liquide dans la colonne (1) |
| n | le nombre d'étages théoriques |
| p | la pression |
| q | la situation thermique de l'alimentation |
| T | la température |
| t | le temps |
| V | le flux de vapeur |
| x | la fraction de mole dans le liquide |
| y | la fraction de mole dans le gaz |
| delta $h_{LG}$ | l'enthalpie de vaporisation |
| | et les indices |
| B | désignant le résidu de distillation |
| D | le produit distillé |
| f | le premier étage de la partie de rectification |
| F | l'alimentation |
| G | le gaz |
| i | les composants |
| j | l'étage théorique |
| n | le dernier étage théorique de la colonne (vaporisateur) |
| R | la partie de renforcement |
| S | la partie de rectification et |
| V | la vapeur. |

2. Dispositif selon la revendication 1, l'installation de fractionnement présentant au moins deux colonnes de rectifications (1) successives, caractérisé en ce que les signaux correspondant aux grandeurs d'alimentation, au flux de masse et à la composition des colonnes suivant la première colonne (1) peuvent être produits par l'ordinateur ou le circuit à partir des signaux des colonnes précédentes.

3. Dispositif selon la revendication 1 ou 2 caractérisé en ce que l'ordinateur ou le circuit est conçu de telle sorte qu'au cas où la concentration de distillation d'un des composants ne dépasse pas 0,1 % dans le traitement des signaux de sortie des appareils de mesure et/ou des signaux des colonnes précédentes

$$x_{D,i} = 0$$

et

$$HU_S \frac{dx_{B,i}}{dt} - x_{B,i} \frac{d\,HU_R}{dt} = F\,Z_{F,i} - B\,x_{B,i}$$

valent pour la détermination de la concentration en produit de ces composants, z désignant la fraction de mole d'alimentation.

4. Dispositif selon une des revendications 1 à 3 caractérisé en ce que l'ordinateur ou le circuit est conçu de tel.Le sorte qu'au cas où la concentration en bas de colonne d'un des composants ne dépasse pas 0,1 % dans le traitement des signaux de sortie des appareils de mesure et/ou des signaux des colonnes précédentes

$$x_{B,i} = 0$$

$$HU_R \frac{d\,x_{D,i}}{dt} + x_{D,i} \frac{d\,HU_R}{dt} = F\,z_{F,i} - D\,x_{D,i}$$

valent pour la détermination de la concentration en produit de ces composants, z désignant la fraction de mole d'alimentation.

5. Procédé de mesure continue des concentrations en produit d'une installation de fractionnement à l'aide d'un dispositif selon une des revendications 1 à 4,caractérisé en ce que les concentrations en produit sont déterminées à intervalles temporels d'au moins 30 min. à l'aide d'une analyse chimique et en ce que ces données d'analyse sont utilisées pour régler l'ordinateur ou le circuit.

6. Dispositif de réglage pour une installation de fractionnement avec un dispositif de mesure assistée par modèle selon une des revendications 1 à 4,caractérisé par des éléments de réglage pour le réglage de deux des quatre flux de masse, à savoir le flux de produit distillé, le flux de recirculation, le flux de vapeur de chauffe et le flux de résidu de distillation ou les grandeurs dérivées formées à partir de ces flux de masse, en particulier les rapports de deux flux et un régulateur relié aux éléments de réglage et commandant ceux-ci pour le maintien des concentrations en produit, les valeurs réelles du régulateur étant les signaux représentant les concentrations en produit.

Fig.1

Fig. 2

$$\frac{d}{dt} \left( \sum_{j=1}^{f-1} HU_j \, x_{j,\,i} \right) = G\,y_{I,\,i} - L\,x_{I,\,i} - D\,x_{D,\,i} + (1-q)\,F\,y_{F,\,i} , \qquad (1)$$
$$j=1,\; ....,\; m$$

$$\frac{d}{dt} \left( \sum_{j=f}^{n} HU_j \, x_{j,\,i} \right) = L\,x_{I,\,i} - G\,y_{I,\,i} - B\,x_{B,\,i} + q\,F\,x_{F,\,i} , \qquad (2)$$
$$j=1,\; ....,\; m$$

$$\frac{d\,HU_j}{dt} = 0 \;\;, \; j = 2,\; ....,\; n-1 \qquad (3)$$

$$\frac{d\,x_{j,\,i}}{dt} = \frac{d\,x_{D,\,i}}{dt} \;, \;\; j = 1,\; ....,\; f-1 \qquad (4)$$

$$\frac{d\,x_{j,\,i}}{dt} = \frac{d\,x_{B,\,i}}{dt} \;, \;\; j = f,\; ....,\; n \qquad (5)$$

$$HU_R = \sum_{j=1}^{f-1} HU_j \qquad (6)$$

$$HU_S = \sum_{j=f}^{n} HU_j \qquad (7)$$

$$x_{D,\,i} \; \frac{d\,HU_R}{dt} + HU_R \, \frac{d\,x_{D,\,i}}{dt} = (1-q)\,F\,y_{F,\,i} - D\,x_{D,i} + G\,y_{I,i} - L\,x_{I,i} \qquad (8)$$

$$x_{B,\,i} \; \frac{d\,HU_S}{dt} + HU_S \, \frac{d\,x_{B,\,i}}{dt} = q\,F\,x_{F,\,i} - B\,x_{B,\,i} - G\,y_{I,\,i} + L\,x_{I,\,i} \qquad (9)$$

$$x_{B,\,i} = 0 \;\; \text{und} \;\;\;\; \frac{d\,x_{B,\,i}}{dt} = 0 \qquad (10)$$

oder

$$x_{D,\,i} = 0 \;\; \text{und} \;\;\;\; \frac{d\,x_{D,\,i}}{dt} = 0 \qquad (11)$$

$$Fig.3$$

$$x_{D,i} \; \frac{d \; HU_R}{dt} \; + \; HU_R \; \frac{d \; x_{D,i}}{dt} \; = \; F \; z_{F,i} \; - \; D \; x_{D,i} \qquad (12)$$

oder

$$x_{B,i} \; \frac{d \; HU_S}{dt} \; + \; HU_S \; \frac{d \; x_{B,i}}{dt} \; = \; F \; z_{F,i} \; - \; B \; x_{B,i} \qquad (13)$$

$$c_{R,i} \; = \; \frac{x_{l,i}}{x_{D,i}} \qquad (14)$$

$$c_{S,i} \; = \; \frac{y_{l,i}}{x_{B,i}} \qquad (15)$$

$$c_{R,i} \; = \; \frac{D}{L} \left( \sum_{j=1}^{f-2} \left( \frac{L}{G + (1-q) \; F} \right)^j \frac{1}{\prod\limits_{l=f-j}^{f-1} k_{l,i}} \right) + \left( \frac{L}{G + (1-q) \; F} \right)^{f-2} \frac{1}{\prod\limits_{l=2}^{f-1} k_{l,i}}$$

$$f > 2 \qquad (16)$$

$$c_{S,i} \; = \; \frac{B}{G} \left( \sum_{j=1}^{n-f} \left( \frac{G}{L + q \; F} \right)^j \prod\limits_{l=f}^{f-1+j} k_{l,i} \right) + \left( \frac{G}{L + q \; F} \right)^{n-f} \prod\limits_{l=f}^{n} k_{l,i} \; , \; n > f$$

$$(17)$$

$$c_{S,i} \; = \; k_{n,i} \; , \; n = f$$

$$\frac{d \; HU_R}{dt} \; = \; G + (1-q) \; F - D - L \qquad (18)$$

$$\frac{d}{dt} \; (HU_R + HU_S) \; = \; F - D - B \qquad (19)$$

$$V \; \Delta h_{L \, G, \, v} \; = \; G \; \Delta h_{LG, \, G} \qquad (20)$$

$$Fig. \; 4$$

Fig. 5

EP 0 460 037 B1